# EUROPEAN PATENT APPLICATION

(11) **EP 4 079 668 A1**
(43) Date of publication of application: **26.10.2022**
(21) Application number: 20902194.8
(22) Date of filing: 11.12.2020
(51) Int. Cl.: B65H 19/18

(54) **AUTOMATIC METHOD FOR SPLICING PREPARATION AND SYSTEM FOR CARRYING OUT SAME**

(30) Priority: 17.12.2019 ES 201931114
(71) Applicant: M. Torres Diseños Industriales, S.A., 31119 Torres de Elorz (Navarra) (ES)
(72) Inventor: TORRES MARTINEZ, Mikel, (deceased) (ES)
(74) Representative: Cabinet Beau de Loménie
(86) International application number: PCT/ES2020/070784
(87) International publication number: WO 2021/123474

(57) **Abstract**

The invention relates to an automatic splice preparation process for splicing two rolls of a material in web format, such as paper, and a system for carrying out same, wherein the positioning system for positioning the paper web of the new roll is displaced automatically by means of a robotic arm (3), the displacement of which is verified and corrected through machine vision means, to locate and capture the edge of the web in a controlled manner. The robotic arm (3) is provided with a head (5) incorporating the machine vision means and gripping areas (8), such that the program-set movement of the assembly is verified and corrected, if needed, through the signals generated by the machine vision system means which are preferably made up of at least three machine vision cameras (14, 15 and 16) positioned in the central area and at the ends of said head (5).

## Description

### Technical field

The present invention relates to the paper converting industry, and more specifically to an automatic process concept for the preparation of the splicing, preferably end-to-end, of the paper between a new roll and a feed roll which is the one that is running out within the corresponding work process.

### State of the art

The paper converting industry has been trying for years to achieve greater automation of the splicing process, such that said process is more efficient and safer as manual labour must no longer have to be relied upon for its implementation. In known converting lines, it must be taken account in the splicing process that several actions must be performed, such as: the preparation of the new replacement roll, application of the adhesive tape, alignment of the paper web of the new roll with paper web of the feed roll and the splicing per se between the feed roll and the new roll.

In the roll preparation process, the new roll must be grabbed, peeled if needed, and a cut must be made in the first layer in order to then apply the adhesive tape to same such that the splicing is as efficient as possible.

Several proposals exist to perform this peeling and/or cutting of the edge, such as the proposal described in patent US5322230, in which the cut for preparing the edge is made in the roll itself, where special care must be taken when calibrating the blades or other element making the cut, since they could cut more than one layer. In applications in which versatility is sought regarding the type of basis weight of the paper to be spliced, encompassing thicknesses ranging from thick to very thin, this may represent a significant problem, as either these solutions are only suitable for one type of paper, giving up versatility, or the blade must be manually calibrated for each case, resulting in a decrease in the agility and speed of the splice preparation process.

In other solutions, such as those described in patents US5386751 and US4821971, the cutting also originates in the new roll, but with the slight variation that the first layer is separated to make the cut in cantilever fashion. In this case, the problem of cutting more than one layer should be solved, but this is not the case and this problem may remain if the papers are very thin and the roll is not sufficiently compacted, such that when only the surface layer is to be separated from the new roll and cut, in the process some other lower layer, which is also cut, is affected.

Another problem with this solution is the cut in cantilever fashion itself, as there is no guarantee that the cut will be parallel to the axis of the roll, either because when the paper is in the air, when the cutting device is actuated, the part of the paper that is not held is not sufficiently rigid and slips, or because the paper is grabbed incorrectly and the cut is not the desired one. It is also sometimes the case that, in the absence of a dolly for the blades, if blades are chosen as the cutting element, given that a safe distance from the first layer of cantilevered paper cannot be ensured, the blade may damage the lower layer, which may compromise the paper and cause a future stop in the line due to tearing of the paper when it is subjected to sufficient tension to cause it to tear.

Another key point of the splice preparation process is the application of adhesive tape. The adhesive tape must assure that the two paper webs are attached without the risk of tearing and must also assure that it will withstand the stresses of the downstream process.

In some proposals, like that described in patent US5902448, a solution for applying the adhesive tape at the same time as cutting is presented. While the transverse cutting is being performed, adhesive tabs are applied. However, this process restricts the type of adhesive tape to be used to a very specific solution and makes it necessary to apply a second strip of adhesive tape on top, covering both the edge of the new web and the part of the adhesive tabs in contact with said edge. In addition, this solution would complicate the adhesive tape application element as it has to be able to lay the adhesive tape tabs in such a way that they are centred for each paper width, which would mean that either only predefined widths can be used or the arrangement of the tabs has to be redistributed to adapt same to the width of each paper, complicating the process.

In short, there are solutions for different types of edge preparation and application of the adhesive tape, but none of the known solutions provides a joint solution, with a fully automatic process from start to finish, with means that allow the process to be controlled, with the possibility of applying the splicing process for a wide range of rolls and with a guarantee that the subsequent splicing and treatment process will remain aligned without the need to install aligners to correct the position of the web.

### Object of the invention

The object of the invention relates to an automatic splice preparation process, preferably for an end-to-end splice, but perfectly compatible for other types of splicing, which assures the alignment of paper webs preferably by means of using machine vision cameras and also assures that the preparation cut will comply with the requirements of a minimum gap preferably between 0 and 2 mm, but it may be different from that value if desired, the gap being the distance between the end edges of the two paper rolls to be spliced.

To carry out this process, the only data that must be input with each new roll are the diameter of the roll, the thickness of the paper, the width of the web and the unwinding direction, in order to start up said process which is carried out automatically.

Another object of this invention is the system for carrying out this process, which is aided by positioning equipment, controlled by a series of pieces of machine vision equipment that aids in the positioning of the rolls and in performing the preparation process.

Also part of this system is one or more controlled positioning actuators, such as a robotic arm mounted on a rail along the machine centre axis on which it moves along the x-axis, to move towards and away from the new roll and the splicing unit. This robotic arm has a head where different means and elements needed for carrying out the splicing process are incorporated.

On the front face of the head of the robotic arm, gripping means for gripping the paper web are defined, preferably made up of areas with vacuum sectors, preferably three in number. Two of these sectors, which are positioned at the ends, are capable of moving simultaneously, moving closer to or away from the central area, such that they can be adapted to the needed roll width. The vacuum sectors allow the paper to be caught and adapting to different roll and surface shapes, without the web being creased or folded.

According to a practical, non-limiting embodiment, each of these three areas is made up of a vacuum sector and a second suction cup sector.

The suction cup sector is actuated with a cylinder for its outward and inward movement, such that these actuated sectors can protrude from the other vacuum sectors and can capture the adhesive tape; however, if desired, this process could be carried out without removing these suction cup sectors and using the same vacuum sectors to capture the adhesive tape as those used to capture the paper, all depending on the type of adhesive tape and the definition of the splicing process.

Of these three vacuum areas, the central area is provided with two vacuum rollers, one above and one below, which are actuated by means of a cylinder that removes them or draws them in, depending on process requirements.

Machine vision cameras are also positioned in the head of the robotic arm, one of said cameras being mounted next to the central vacuum area, at an angle with a laser which is used for the detection of the edge of the new roll. The other two cameras are mounted next to each side vacuum area and will move with them, so that for different web widths the cameras will see the same edges of the paper web without having to vary the focal length. These two cameras are in charge of aligning the web and verifying the length of the adhesive tape, as well as the correct position thereof in the preparation table.

A dolly is arranged at the lower edge of the head for the preparation cut for preparing the new web. There is also arranged a row of suction cups with a vacuum to capture the remaining paper that will be disposed of and two pins to verify the position of the head on the table where cutting is performed.

In a preferred configuration of the invention, the upper edge of the head is also fitted with a rubber pressure sector, which by applying pressure on the gluing area will secure the bond between the paper web and the adhesive tape to assure adhesion.

According to the object of this invention, the process starts from having a new roll prepared for splicing, already loaded and raised in a conventional device that allows it to be rotated in both directions. This new roll will have the start of the paper web in any one unknown position, towards which the arm of the robotic arm will advance with its head in the vertical position and with the three vacuum areas described above, facing the new roll.

In this phase of the process, the pressure rollers occupy the position of being removed, such that they protrude from the surface of the vacuum sectors.

The head moves closer up to a distance pre-set by the corresponding computer program, wherein the pressure rollers are positioned on the surface of the new roll, but not the vacuum sectors, leaving sufficient space for the field of view set for the central camera and for the laser, such that they detect the edge of the new roll.

The laser draws a line on the paper web of the new roll and the central camera plus the corresponding software are capable of correctly discriminating the data, retaining only the variation of the laser that corresponds to the detection of the edge.

The new roll starts to turn until the central camera detects the line break of the laser indicating that it has found the edge, then rotation stops. At this point the pressure rollers are withdrawn back to their stable drawn in position, allowing the roll to be rewound, causing the edge to move backwards or forwards (depending on how the roll has been positioned) and out of the area enclosed by the pressure rollers. When this occurs, the roll stops again and then the head of the robotic arm moves closer, positioning the pressure rollers and in turn the vacuum areas. When the position is ensured, the vacuum of the sectors is activated, assuring that the upper layer of the paper web of the new roll has been captured and can be transported, knowing where the edge is located.

When the paper web of the new roll has been captured by the head of the robotic arm, said head transfers it to a cutting table which is also a vacuum table. At this point, the head of the robotic arm leaves the paper web of the new roll on the vacuum and cutting table, such that correct holding is ensured and the next step can be performed, which consists of activating the vacuum of the table and deactivating the vacuum of the vacuum sectors of the head of the robotic arm.

The cutting process is the preparation process for preparing the edge of the web of the new roll. The cutting must be such that it allows end-to-end splicing with the required tolerances. When the head of the robotic arm has released the paper web on the vacuum and cutting table, the robotic arm is withdrawn to a position which allows it to rotate the head to the vertical position, in which the dolly is in the lower part.

In this position, the two pins of the ends of the line of suction cups are matched up to two housings located in the vacuum and cutting table in order to verify that the head has been positioned correctly in the vacuum and cutting table. In a preferred configuration of the invention, the vacuum and cutting table itself has a cutting system with blades that cut the web against the dolly of the head of the robotic arm. When the cut has been made, the vacuum of the table is deactivated and with the vacuum of the line of suction cups of the head of the robotic arm activated, the remaining surplus of the paper web after cutting is grabbed, such that the head and the robotic arm are withdrawn to a pre-set position to deposit this remaining paper as waste.

After having removed the remaining paper, the robotic arm places its head with its largest face arranged parallel to the corresponding adhesive tape which will be prepared in the corresponding support structure for said tape. The adhesive tape in this case will be one-sided because end-to-end splicing is being performed, but if it were an overlap splice, the tape would be two-sided. The tape must be pre-cut in the moment in which the head of the robotic arm is positioned above it, first to verify its length with the side machine vision cameras which, aided by a ruler located along the deposited and cut tape, can match the edge of the tape to the desired measurement.

In a later phase, the robotic arm will pull out the suction cup sectors of the vacuum areas that are actuated by a cylinder and intended for catching the tape by the face having the adhesive tape. When the adhesive tape is captured in that way, it is taken to a second table identified as the preparation and splicing table, which is also provided with a vacuum. The adhesive tape will be left duly centred on this preparation and splicing table and its position will be ensured by means of the vision cameras.

Once the position of the adhesive tape on a preparation table has been ensured, the robotic arm is displaced from this second table to capture the paper web of the new roll that has been left with the edge prepared on the first vacuum and cutting table. The side cameras are used to observe the position of both corners of the cut edge of the new roll in order to know the position thereof, and by capturing it to align it with the web of the feed roll and to align it with the correct position of the edge on the adhesive tape, so that when it is to be spliced with the feed roll the minimum gap possible, or the minimum gap required, is produced. If the splice is an overlap splice, the position of the edge does not have to be as precise, but web alignment continues to be beneficial.

When the head of the robotic arm has verified the current position and compares it with that of the feed web, it captures the edge of the paper web of the new roll such that it can correct the position, if needed, to then take it to the second vacuum and preparation table, where the adhesive tape will be waiting. By using visual references for the cameras, the robotic arm centres the edge and deposits it on the adhesive tape. The head is subsequently placed perpendicularly in order to apply a fixing pressure on the attachment of both materials.

Once this has been performed and according to a practical, non-limiting embodiment, the second preparation and splicing table is displaced to the area where the web of the feed roll that is running out in order to then perform the corresponding splicing.

With the splice already performed and by conventional means, the new roll will become the feed roll and a new roll will be arranged to carry out the entire splicing process again when necessary.

The possibility of whether or not a fixing tape is used is left up to the process. The application of the fixing tape can either be done in a way similar to the adhesive splicing tape or the device can be located in the head of the robotic arm and applied after placing the new paper web on the splicing tape.

This fixing can be used in cases where it is desired to conceal the gap of such a size that it could represent a problem in post-splicing processes when the visible segment of adhesive tape comes into contact with some element.

### Description of the figures

Figure 1 is a schematic perspective view of the elements forming part of the splicing system object of the present invention according to a practical, non-limiting, exemplary embodiment, and being formed by a vacuum and cutting table (1), a preparation and splicing table (2) and a robotic arm (3), with the head (5) of the robotic arm (3) being depicted on the vacuum and cutting table (1).
Figure 2 is the elevational view corresponding to Figure 1.
Figure 3 is a view like that of Figure 1, but in this case with the head (5) positioned above the preparation and splicing table 2.
Figure 4 is the elevational view corresponding to Figure 1.
Figure 5 is a view like that of Figure 1, but in this case depicting the rolls to be spliced (6 and 7).
Figure 6 is the elevational view corresponding to Figure 1.
Figure 7 is a view like that of Figure 3, but in this case depicting the rolls to be spliced (6 and 7).
Figure 8 is the elevational view corresponding to Figure 7.
Figure 9 is an elevational view schematically showing the arm of the robotic arm (3) according to four working positions; the first position with its head (5) in contact with the new roll (6); the second position with the head (5) positioned above the vacuum and cutting table (1); the third position with the head (5) positioned in correspondence with the preparation and splicing table (2); and the fourth position with the head (5) in connection with the support structure (23) for the adhesive tape (10).
Figure 10 is a perspective view of the robotic arm (3).
Figure 11 shows in detail the head (5) of the robotic arm (3).
Figure 12 corresponds to a bottom plan view of the head (5).
Figure 13 is a front elevational view of the head (5).
Figure 14 corresponds to a top plan view of the head (5).
Figure 15 is a top plan view of the vacuum and cutting table (1).
Figure 16 is a schematic perspective view showing the robotic arm (3) moving closer to the new roll (6), with the vacuum and cutting table (1) and the preparation and splicing table (2) having been removed so as to not hinder viewing. The feed roll (7) is not depicted for the same reason.
Figure 17 is an elevational view like that of Figure 10, but with the head (5) now in contact with the paper web (6.1) of the roll (6).
Figures 18 and 19 are respective details showing the pressure rollers (1) in contact with the new roll (6) and separated from same, respectively.
Figure 20 is a perspective view showing the head (5) of the robotic arm (3) depositing the paper web (6.1) of the new roll (6) on the vacuum and cutting table (1).
Figure 21 is an elevational view corresponding to Figure 20.
Figure 22 is a perspective view of a detail of the head (5) with the paper web (6.1) of the new roll (6) having been deposited on the vacuum and cutting table (1).
Figure 23 shows a perspective view of the cutting phase for cutting the paper web (6.1) of the new roll (6).
Figure 24 is an elevational view of the same phase of the process depicted in Figure 23.
Figure 25 is a perspective view of a detail showing the head in the phase depicted in Figures 23 and 24.
Figure 26 is a perspective view of a detail showing the head (5), with the excess piece (22) of paper web being taken from the new roll (6) once the cut has been made.

### Detailed description of the invention

The object of the invention relates to an automatic preparation and splicing process for two rolls of paper identified in the attached drawings with reference numbers (6 and 7),

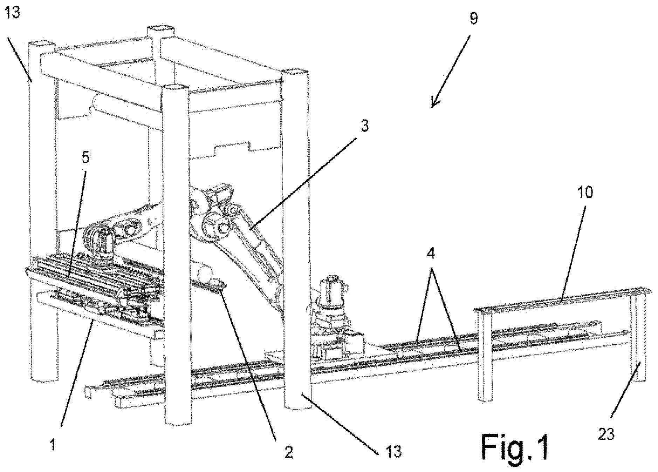

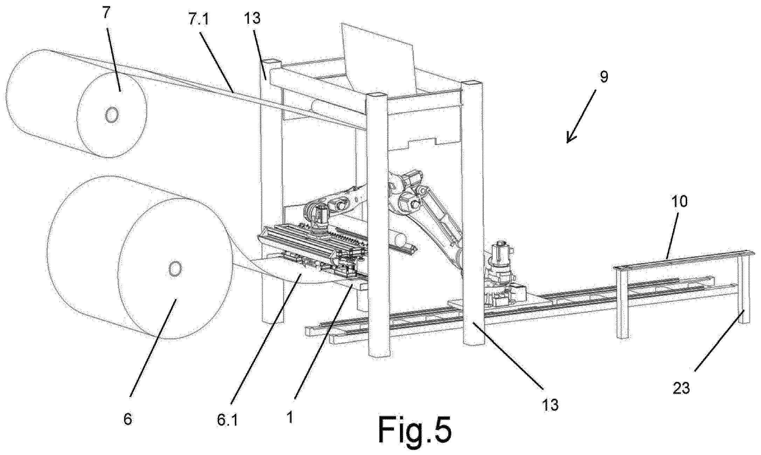

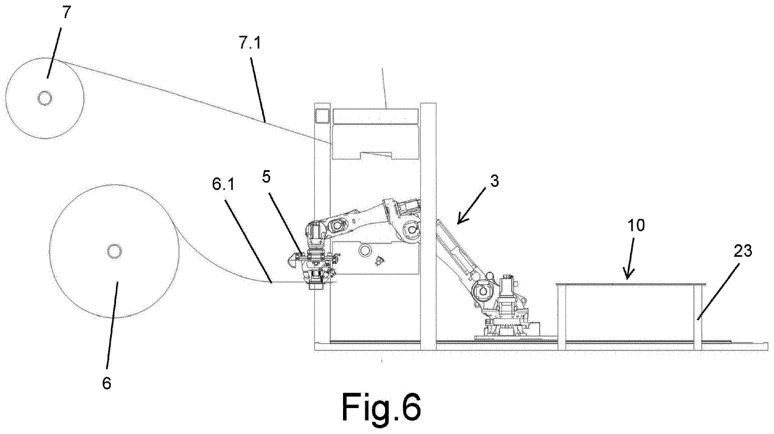

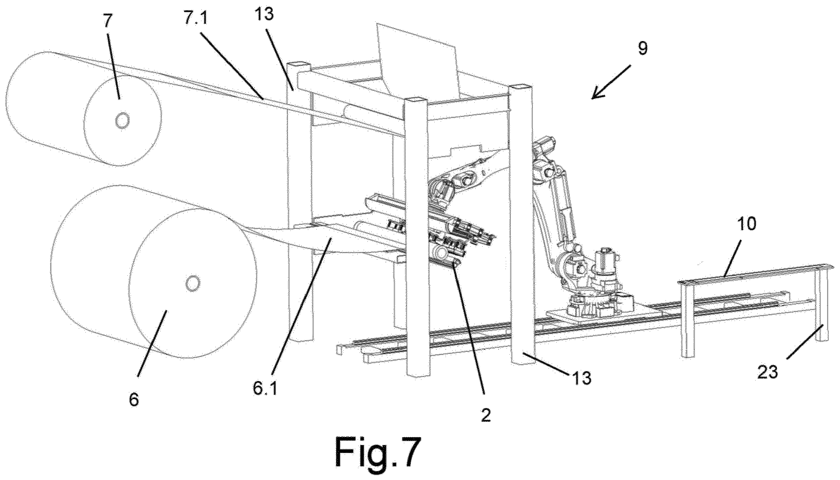

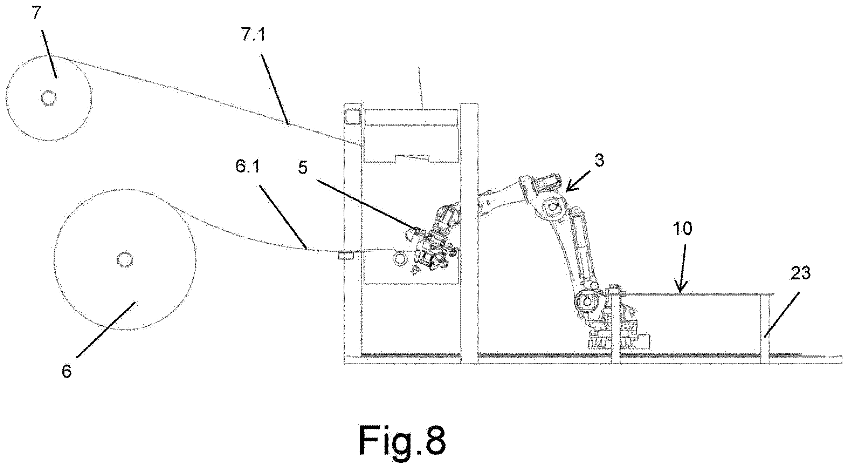

To carry out this process, means and equipment are used where said means and equipment constitute a system which, according to a practical, non-limiting, exemplary embodiment is depicted in the attached figures and is made up of two tables (1 and 2) and a system of controlled positioning actuators, such as a robotic arm (3), provided with a head (5), with the corresponding tools, as can be seen in Figure 1, such that the splicing of the two paper rolls (6 and 7) is automatically carried out with this equipment, with the roll (7) being what is referred to as the feed roll, as it is the roll that is being used in the corresponding work process, whereas roll (6) is identified as the new roll and is the roll that is prepared for being spliced to the previous roll when it is running out, see Figures 5, 6, 7 and 8.

The splice depicted in the attached drawings is an end-to-end splice, as this is the most complex splice, but the object of the invention is perfectly compatible with other splice types. As will be seen below, this process assures the alignment of paper webs and also assures that the preparation cut will comply with the requirements of a minimum gap preferably between 0 and 2 mm, but it may be different from that value if desired, the gap being the distance between the end edges of the two paper rolls (6 and 7) to be spliced.

The robotic arm (3) is mounted on rails (4) located along the machine centre axis on which it moves along the x-axis, to move closer to and away from the new roll (6) and the preparation, cutting and splicing area. This robotic arm (3) incorporates a head (5) where different means and elements needed for carrying out the splicing process are incorporated.

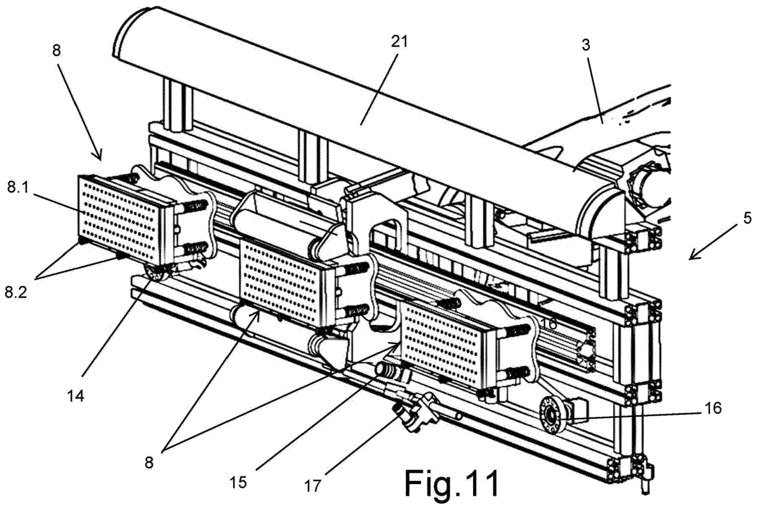

Gripping areas identified with reference number (8), see Figure 11, preferably arranged three in number, are defined on the front face of the head (5) of the robotic arm (3). The two gripping areas (8), which are positioned at the ends, are capable of moving simultaneously, moving closer to or away from the central gripping area (8), such that they can be adapted to the needed roll width.

According to a practical, non-limiting embodiment, each of these three gripping areas (8) is made up of a vacuum sector (8.1) and a suction cup sector (8.2). The vacuum sectors (8.1) allow the paper to be trapped and adapted to the different roll and surface shapes, without the web being creased or folded.

The possibility of both the vacuum sector (8.1) and the suction cup sector (8.2) being made up of suction cups has been provided for, by providing controlled movement only to the suction cup sector (8.2). That is, instead of the vacuum sectors (8.1) having means which allow a vacuum to be established in order to grab the paper web, these means are replaced with suction cups which would perform one and the same function, or any other conventional means which allows that function to be established.

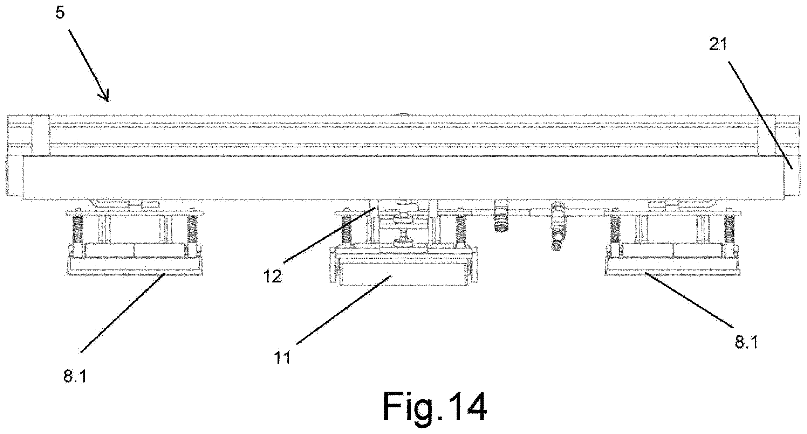

According to a practical, non-limiting, exemplary embodiment, each vacuum sector (8.1) is made up of a perforated sponge in order to generate the necessary vacuum. These perforated sponges are mounted in a support coupled to the fixed structure of the head (5) by means of feet equipped with a spring which establish an elastically damped assembly of the perforated sponges, as can be seen in Figures 11 to 14. As indicated in the preceding paragraph, these vacuum sectors (8.1) do not have to be configured based solely on perforated sponges, where they can be replaced with another type of vacuum means the function of which is the same as that of the perforated sponges or with other conventional means which allow that function to be performed.

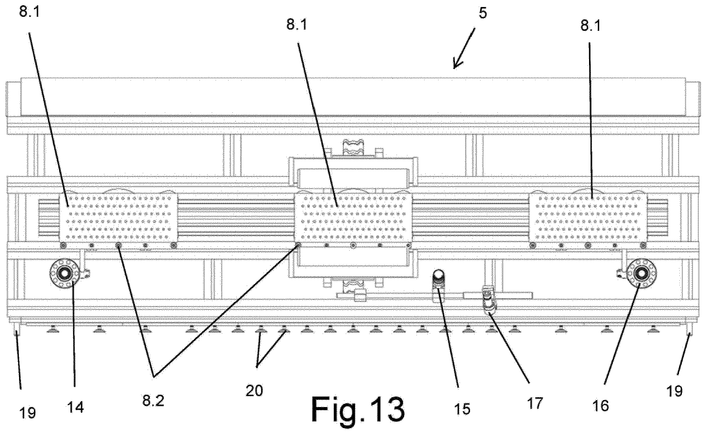

As can be seen in Figure 13, the suction cup sector (8.2) is determined by small suction cups arranged at the lower edge of each vacuum sector (8.1). By means of the corresponding cylinders, these suction cups can be displaced between respective stable positions.

Since the suction cup sectors (8.2) are actuated with cylinders, they can move outwards and inwards, such that these suction cup sectors (8.2) can protrude with respect to the other vacuum sectors (8.1) and can capture the corresponding adhesive tape (10) to be used in the splicing. However, if desired, this process could be performed without removing these suction cup sectors (8.2) and using the same vacuum sectors (8.1) to capture the adhesive tape (10) as those used to capture the paper, all depending on the type of adhesive tape (10) to be used.

Of these three gripping areas (8), the central area is provided with two pressure rollers (11), one above and one below, actuated by means of cylinders (12) that remove or draw them in, depending on process requirements. The support of each of these pressure rollers (11) is guided in displacement by means of respective cylindrical guides.

Machine vision cameras are also positioned in the head (5) of the robotic arm (3), said cameras being preferably three in number, indicated with reference numbers (14, 15 and 16), of those cameras (14 and 16) are located on the sides and camera (15) in the central area, as can be seen in Figure 11. The robotic arm (3) moves to the points predetermined by the corresponding computer program and the side machine vision cameras (14 and 16) and the central camera (15) verify and correct the position of the robotic arm (3), if needed.

The central camera (15) is mounted next to the central gripping area (8), at an angle with a laser (17) which is used for the detection of the edge of the new roll (6). The side cameras (14 and 16) are mounted next to each side gripping area (8) and will move with same, such that for different web widths the side cameras (14 and 16) will see the same edge of paper without having to vary the focal length. These two side cameras (14 and 16) are in charge of aligning the paper web and verifying the length of adhesive tape (10).

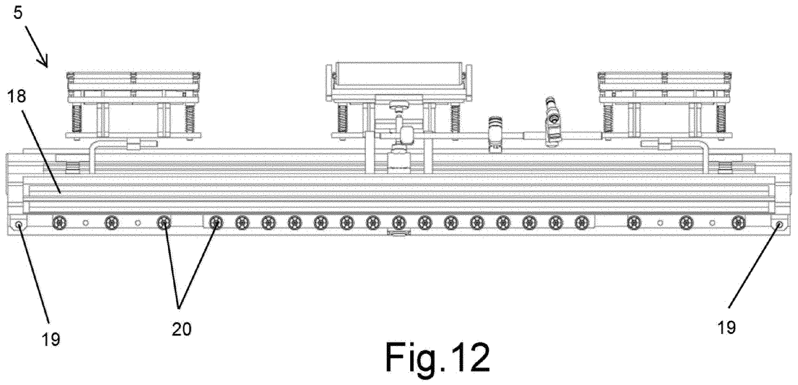

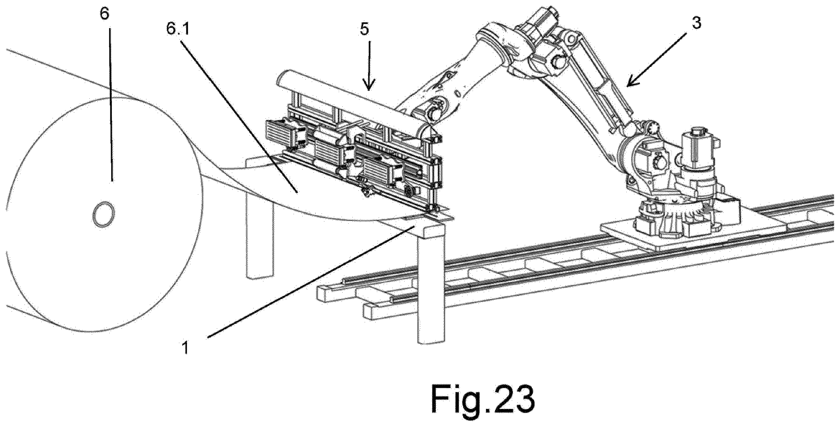

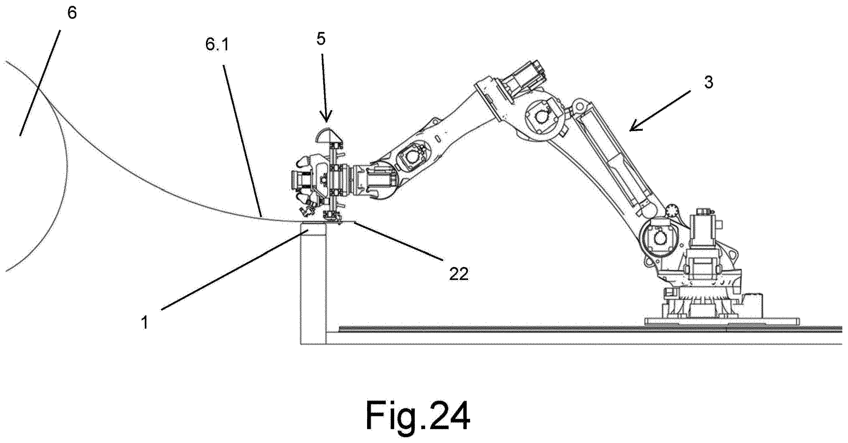

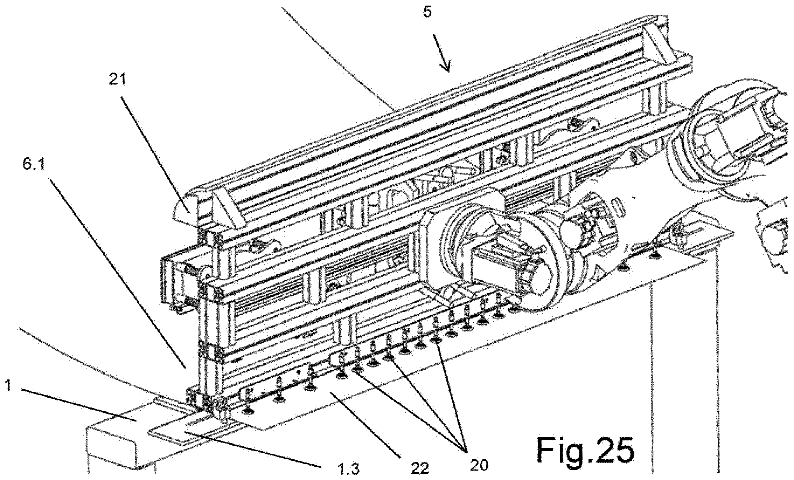

A dolly (18) is arranged at the lower edge of the head (5) for the preparation cut for preparing the paper web (6.1) of the new roll (6). There is also arranged a row of suction cups (20) with a vacuum, see Figures 12 and 13, to capture the remaining paper (22) that will be disposed of after the cutting, and two pins (19) which, by means of their penetration in respective housings of the table (1), which are not depicted, will verify the position of the head (5) on the table (1) where cutting is performed to verify that the head (5) has been positioned correctly on the table (1), see Figures 23, 24 and 25.

Each suction cup (20) is mounted on a support shaft with a spring, such that an assembly of the suction cups (20) with elastic damping is established.

In the upper edge of the head (5), see Figures 11 and 13, a rubber sector or hold-down plate (21) is arranged which will secure the attachment between the paper web (6.1) and the adhesive tape (10) to assure the adhesion thereof.

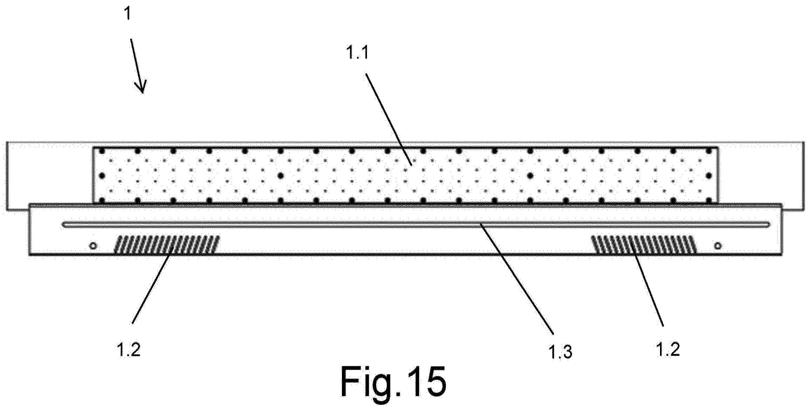

As can be seen in Figure 15, the table (1) has a perforated strip (1.1) in its upper part in order to generate the corresponding vacuum through same and a groove (1.3) for the passage of the cutting blades cutting the paper web (6.1) against the dolly (18) of the head (5) of the robotic arm (3). Said Figure 15 also shows the existence of vacuum spillways identified with reference number (1.2) in the upper part of the table (1) to adapt the length of the vacuum which is established through the perforated strip (1.1) to different paper web widths. Therefore, this table (1) will be identified as a vacuum and cutting table (1).

The table (2) referred to as the preparation and splicing table (2) has a preparation bar (2.1), with a vacuum, on which the adhesive tape (10) used for splicing is deposited.

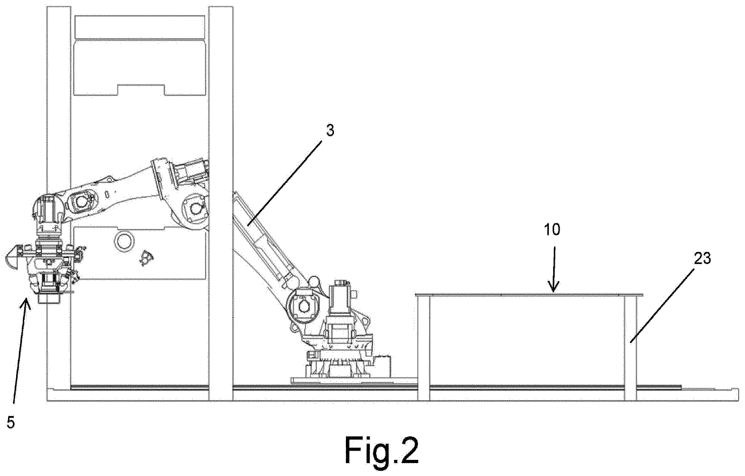

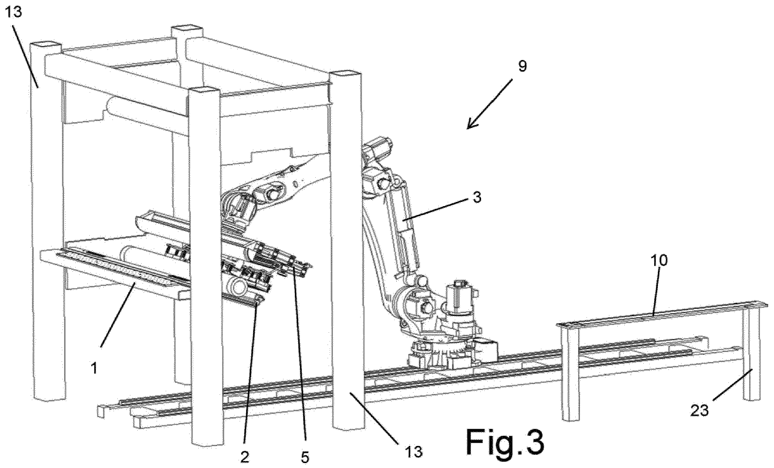

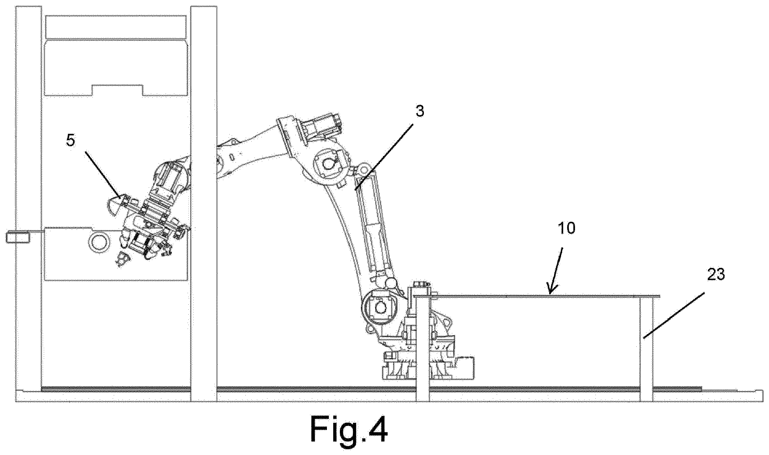

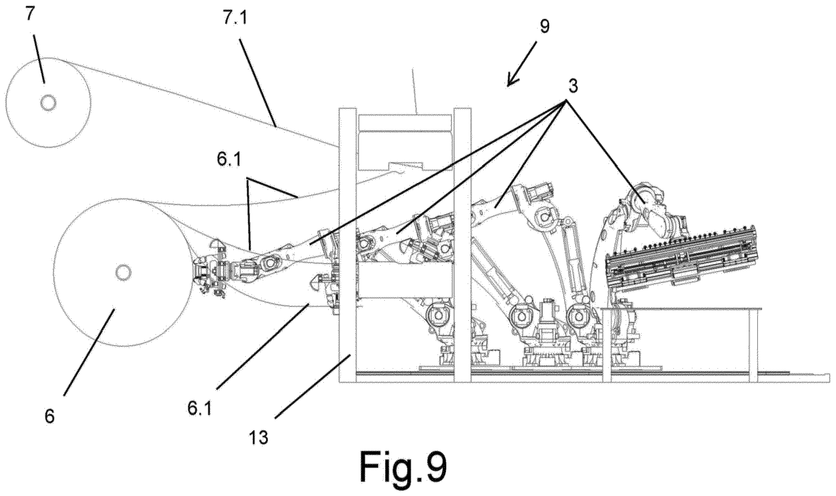

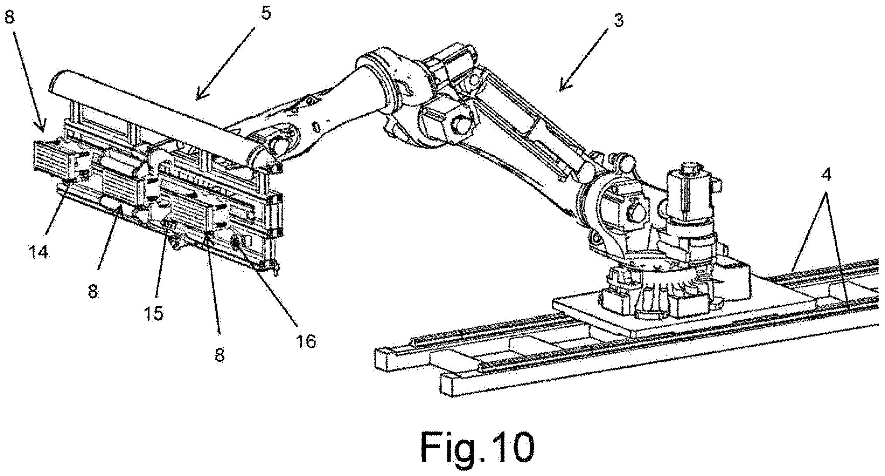

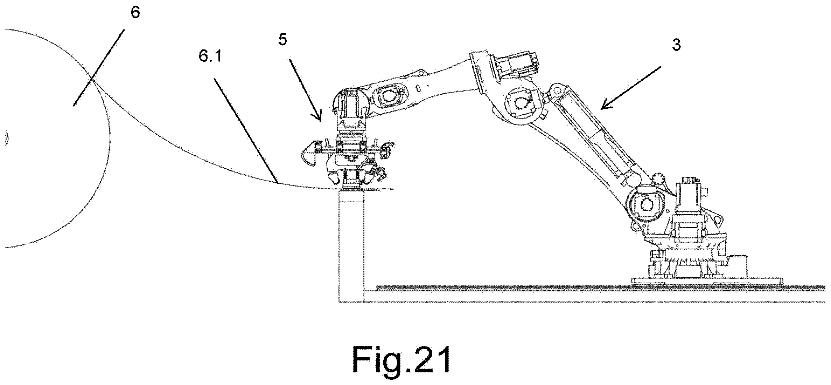

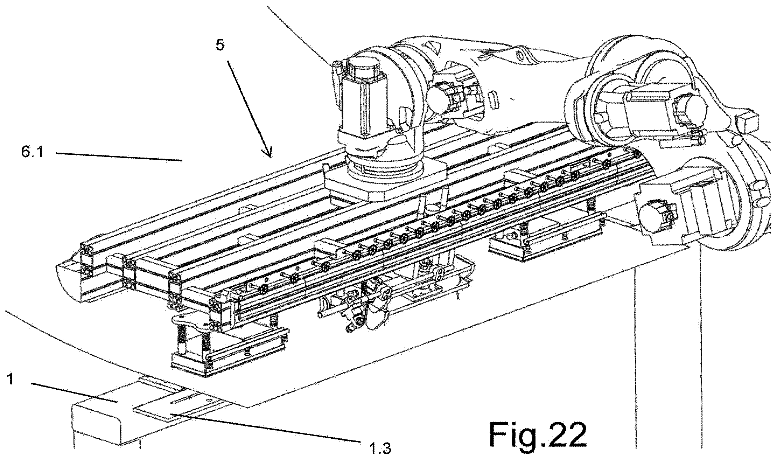

Though not depicted in Figures 10 to 26 of the attached drawings for the sake of a simple explanation, the vacuum and cutting table (1) and/or the preparation and splicing table (2) can be mounted on conventional structures which allow movement in a horizontal and/or vertical plane through known means. For example, there has been provided an assembly in a double bridge structure (9) which can be displaced in a horizontal plane and with the possibility of the vacuum and cutting table (1) and/or the preparation and splicing table (2) being able to move up or down along the vertical columns (13) of the bridge structure to move closer to or away from the rolls (6 and/or 7). This possible practical depiction is the one depicted in Figures 1 to 9 where it can be seen how tables 1 and 2 extend between the columns (13) with the possibility of being displaced in height along same, such that in the cutting phase table (1) can be above the splicing table (2) and vice versa in the splicing phase. Furthermore, and in the splicing between the rolls (6 and 7), the splicing table (2) can move up in search of the paper web (7.1) of the roll (7).

According to this practical, non-limiting, exemplary embodiment, it has even been provided for the tables (1 and 2) to extend between the columns (13) of the double bridge structure (9) or for each of them to protrude in cantilever fashion from a column (13).

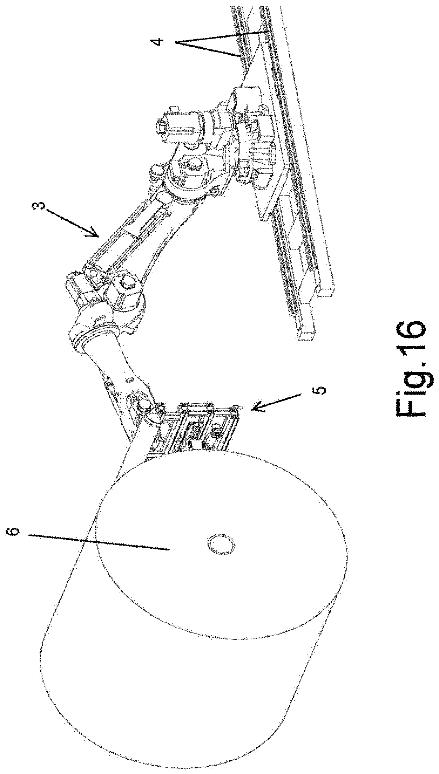

According to the object of this invention, the process starts from having a new roll (6) prepared for splicing, already loaded and raised in a conventional device that allows it to be rotated in both directions. This new roll (6) will have the start of the paper web (6.1) in any one unknown position, towards which the arm of the robotic arm (3) will advance with its head (5) in the vertical position and with the three gripping areas (8) facing the new roll (6), as can be seen in Figure 16.

In this phase of the process (11), the pressure rollers occupy the position of being removed, such that they protrude from the surface of the vacuum sectors (8.1).

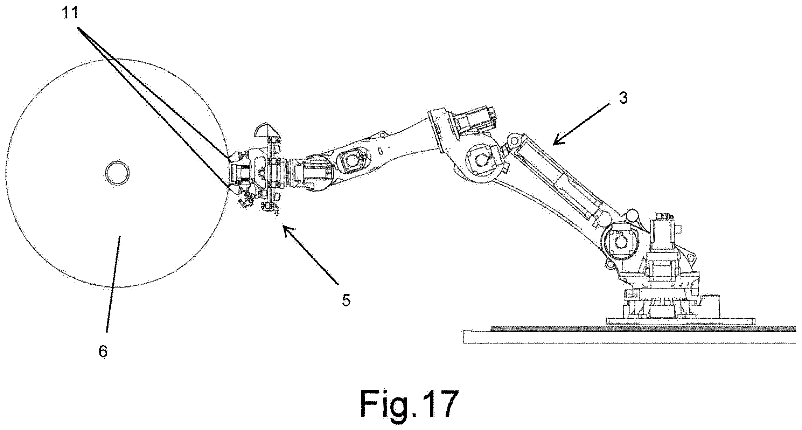

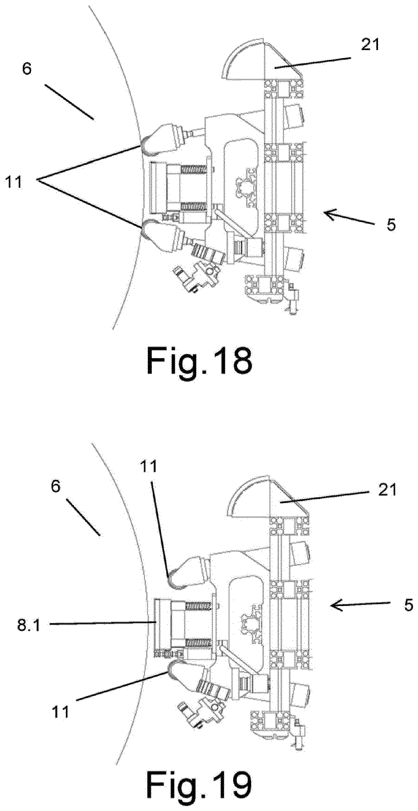

The head (5) moves closer up to a pre-set distance, wherein the pressure rollers (11) are positioned on the surface of the new roll (6), but not the vacuum sectors (8.1), as can be seen in Figure 17 and in the detail of Figure 18, leaving sufficient space for the field of view set for the central camera (15) and for the laser (17), such that they detect the edge of the new roll (6).

The laser (17) draws a line on the paper web (6.1) of the new roll (6) and the central camera (15) plus the corresponding software are capable of correctly discriminating the data, retaining only the variation of the laser (17) that corresponds with the detection of the edge of the paper web (6.1) of the new roll (6).

The new roll (6) starts to turn until the central camera (15) detects the line break of the laser (17) indicating that it has found the edge of the new roll (6), then rotation stops. At this point the pressure rollers (11) are withdrawn back to their stable drawn in position, as can be seen in Figure 19, allowing the roll (6) to be rewound, causing the edge to move backwards or forwards (depending on how the roll (6) has been positioned) and out of the area enclosed by the pressure rollers (11). When this occurs, the roll (6) stops again and then the head of the robotic arm (5) moves closer, positioning the pressure rollers (11) and in turn the vacuum sectors (8.1). When the position is ensured, the vacuum of the sectors (8.1) is activated, assuring that the upper layer of the paper web (6.1) of the new roll (6) has been captured and can be transported, knowing where the edge is located.

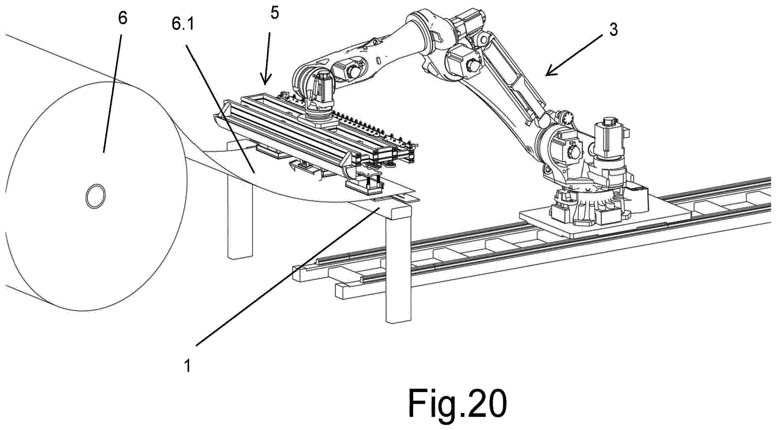

When the paper web (6.1) of the new roll (6) has been captured by the head (5) of the robotic arm (3), said head (5) transfers it to the vacuum and cutting table (1). At this point, the head (5) of the robotic arm (3) leaves the paper web (6.1) of the new roll (6) on the vacuum and cutting table (1), as can be seen in Figures 20 to 22, such that correct holding is ensured and the next step can be performed, which consists of activating the vacuum of the table (1) and deactivating the vacuum of the vacuum sectors (8.1) of the head (5) of the robotic arm (3).

The cutting process is the preparation process for preparing the edge of the new roll (6). The cutting must be such that it allows end-to-end splicing with the required tolerances. When the head (5) of the robotic arm (3) has released the paper web (6.1) of the new roll (6) on the vacuum and cutting table (1), the robotic arm (3) is withdrawn to a position which allows it to rotate the head (5) to the vertical position, in which the dolly (18) is in the lower part.

In this position, the two pins (19) of the ends of the line of suction cups (20) are matched up to two corresponding housings located in the vacuum and cutting table (1). These housings are not depicted so as not to complicate unnecessarily the depiction of the figures in the attached drawings. With all this so arranged, it is verified that the head (5) has been correctly positioned on the vacuum and cutting table (1). The vacuum and cutting table (1) itself, through its cutting system with blades which could be any conventional cutting system, cuts the paper web (6.1) of the new roll (6) against the dolly (18) of the head (5) of the robotic arm (3). The cutting blades emerge and run along the groove (1.3) of the upper part of the vacuum and cutting table (1), see Figures 23 to 25.

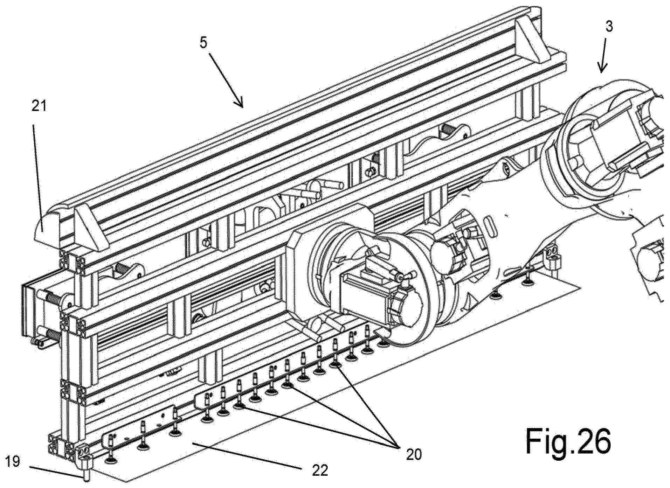

When the cut has been made, the vacuum of the table (1) is deactivated and with the vacuum of the line of suction cups (20) of the head (5) of the robotic arm (3) activated, the remaining surplus (22) of the paper web (6.1) after cutting is grabbed, as depicted in Figure 26, such that the head (5) and the robotic arm (3) are withdrawn to a pre-set position to deposit this remaining paper (22) as waste.

After having removed the remaining paper, the robotic arm (3) places its head (5) with its largest face arranged parallel to the corresponding adhesive tape (10) which will be prepared in the corresponding support structure (23) for said adhesive tape (10). The adhesive tape (10) in this case will be one-sided because end-to-end splicing is being performed, but if it were an overlap splice, the tape would be two-sided. The adhesive tape (10) must be pre-cut in the moment in which the head (5) of the robotic arm (3) is positioned above it, first to verify its length with the side machine vision cameras (14 and 16) which, aided by a ruler located along the deposited and cut adhesive tape (10), can match the dimensions and the edges of the tape (10) to the desired measurement. For this work it is not necessary for the central camera (15) to start operating, but it could, if needed, without this changing the essence of the invention at all.

In a later phase, the robotic arm (3) will pull out the suction cup sectors (8.2) of the gripping areas (8) that are actuated by a cylinder and intended for trapping the tape (10) by the face having the adhesive tape. When the adhesive tape (10) is captured in that way, it is taken to the preparation and splicing table (2), which is also provided with a vacuum. The adhesive tape (10) will be left duly centred on this preparation and splicing table (2) and its position will be ensured by means of the side vision cameras (14 and 16), where the central camera (15) may optionally be used.

Once the position of the adhesive tape (10) on the preparation bar (2.1) has been ensured, the robotic arm (3) is displaced from this preparation and splicing table (2) to capture the paper web (6.1) of the new roll (6) that has been left with the edge prepared on the vacuum and cutting table (1). The side vision cameras (14 and 16) are used to observe the position of both corners of the cut edge of the new roll (6) to know the position thereof, and by capturing it to align it the paper web (7.1) of the feed roll (7) and to align it with the correct position of the edge on the adhesive tape (10), so that when it is to be spliced with the feed roll (7) the minimum gap possible, or the minimum gap required, is produced. If the splice is an overlap splice, the position of the edge does not have to be as precise, but web alignment continues to be beneficial.

When the head (5) of the robotic arm (3) has verified the current position and compares it with that of the paper web (7.1) of the feed roll (7), it captures the edge of the paper web (7.1) of the new roll (6), such that it can correct the position, if needed, to then take it to the preparation and splicing table (2), where adhesive tape (10) will be waiting. By using visual references for the central vision camera (15) and/or the side vision cameras (14 and 16), the robotic arm (3) centres the edge of the paper web (6.1) of the new roll (6) and deposits it on the adhesive tape (10). The head (5) is subsequently placed perpendicularly to exert a fixing pressure on the attachment of both materials, by means of the hold-down plate (21).

Once this has been performed and according to a practical, non-limiting embodiment, the second vacuum and preparation table is displaced vertically in order to reach the area of the feed roll (7) that is running out and then perform the corresponding splicing.

With the splicing already performed and by conventional means, the new roll (6) will become the feed roll (7) and a new roll will be arranged to carry out the entire splicing process again when necessary.

The possibility of whether or not a fixing tape is used is left up to the process. The application of the fixing tape can either be done in a way similar to the adhesive splicing tape (10) or the device can be located in the head (5) of the robotic arm (3) and applied after placing the paper web (6.1) of the new roll (6) on the adhesive tape (10). This fixing tape can be used in cases where it is desired to assure that for a certain gap value in the space between the edges of the paper webs (6.1 and 7.1) of the rolls (6 and 7) to be spliced, the adhesive tape of the adhesive tape (10) does not come into contact with the rollers of the rest of the line.

Therefore, to start up the splicing process for splicing two rolls (6 and 7), the only data that must be input with each new roll (6) are the diameter of said roll, the thickness of the paper, the width of the web and the unwinding direction, in order to start up said process which is carried out automatically.

## Claims

1. An automatic splice preparation process for splicing rolls (6 and 7) of a material in web format, such as paper, **characterised in that** the positioning system for positioning the paper web (6.1) of the new roll (6) is displaced automatically by means of a system of controlled positioning actuators, such as a robotic arm (3), the displacement of which is set by a program and verified and corrected, if needed, through machine vision means, also used to locate and capture the edge of the web in a controlled manner.

2. The automatic splice preparation process according to the preceding claim, **characterised in that** the positioning system positions in an automatic and controlled manner the paper web (6.1) of the new roll (6) on a cutting area, so as to proceed to completely cut the initial segment of the paper web (6.1), in the direction perpendicular to the material unwinding direction

3. The automatic splice preparation process according to claim 1, **characterised in that** by means of the machine vision means, the positioning system automatically proceeds to the positioning and placement of the adhesive tape (10).

4. The automatic splice preparation process according to claim 1, **characterised in that** in the positioning phase for positioning the paper web (6.1) of the new roll (6), a head (5) of the robotic arm (3) approaches up to a pre-set distance to the new roll (6), leaving sufficient space for the set field of view for the machine vision means, such that they detect the edge of the new roll (6).

5. The automatic splice preparation process according to claims 1 and 4, **characterised in that** in the positioning phase for positioning the paper web (6.1) of the new roll (6), the new roll (6) starts to turn until a central camera (15) of the machine vision means detects the line break of a laser (17) indicating that it has found the edge of the new roll (6), with the rotation of the new roll (6) then stopping, and **in that** when the position of the new roll (6) has been ensured, the head (5) of the robotic arm (3) captures the upper layer of the paper web (6.1) of the new roll (6) and, knowing where the edge thereof is located, transfers it to the cutting area.

6. The automatic splice preparation process according to claim 3, **characterised in that** the adhesive tape (10) will be pre-cut, in the moment that the head (5) of the robotic arm (3) is positioned above it, to verify the length thereof with the corresponding machine vision means, to match the dimensions and the edges of the adhesive tape (10) to the desired measurement.

7. The automatic splice preparation process according to claims 3 and 6, **characterised in that** when the position of the adhesive tape (10) has been ensured, with the corresponding machine vision means of the head (5), the position of both corners of the cut edge of the new roll (6) is observed in order to know the position thereof, and upon capturing this area of the edge, to be able to align it with the paper web (7.1) of the feed roll (7) and with respect to the new roll (6) and to also align it with the correct position of the edge on the adhesive tape (10).

8. A system for carrying out the automatic splicing process, **characterised in that** it comprises a system of controlled positioning actuators, such as a robotic arm (3) provided with a head (5) incorporating machine vision means and gripping means, such that the movement of the assembly is set by means of the corresponding program and verified and corrected, if needed, by means of the signals generated by the machine vision means.

9. The system for carrying out the automatic splicing process according to claim 8, **characterised in that** the machine vision means of the head (5) are preferably made up of at least three machine vision cameras (14, 15 and 16), among which camera (15) is positioned in the central area and cameras (14 and 16) are positioned at the ends of said head (5).

10. The system for carrying out the automatic splicing process according to claims 8 and 9, **characterised in that** the central camera (15) is arranged at an angle with a laser (17) which is used for the detection of the edge of the new roll (6).

11. The system for carrying out the automatic splicing process according to claims 8 and 9, **characterised in that** the head (5) has gripping areas (8), preferably three in number, one of them being located in the central part and the other two at the sides.

12. The system for carrying out the automatic splicing process according to claim 11, **characterised in that** according to a preferred embodiment the gripping areas (8) can act separately or together and each of them is made up of a vacuum sector (8.1) and a suction cup sector (8.2).

13. The system for carrying out the automatic splicing process according to claim 8, **characterised in that** a dolly (18) and a row of suction cups (20) with a vacuum for capturing the remaining paper (22) that will be disposed of after the cutting are arranged at the lower edge of the head (5), whereas a hold-down plate (21) is arranged at its upper edge.
